# EUROPEAN PATENT APPLICATION

(11) **EP 4 783 509 A1**
(43) Date of publication of application: **29.07.2026**
(21) Application number: 24876318.7
(22) Date of filing: 05.09.2024
(51) Int. Cl.: H04L 5/00

(54) **COMMUNICATION METHOD AND COMMUNICATION APPARATUS**

(30) Priority: 08.10.2023 CN 202311305163
(71) Applicant: HUAWEI TECHNOLOGIES CO., LTD., Shenzhen, Guangdong 518129 (CN)
(72) Inventor: WU, Qing, Shenzhen, Guangdong 518129 (CN); DING, Suying, Shenzhen, Guangdong 518129 (CN); TANG, Guimin, Shenzhen, Guangdong 518129 (CN)
(74) Representative: Goddar, Heinz J.
(86) International application number: PCT/CN2024/117173
(87) International publication number: WO 2025/077498

(57) **Abstract**

This application provides a communication method and a communication apparatus. The method includes: A network device allocates different resources to a nearby terminal device and a distant terminal device, thereby preventing a same resource from being simultaneously allocated to both the nearby terminal device and the distant terminal device. This reduces interference caused by reference signals sent by the nearby terminal device to those sent by the distant terminal device, consequently improving signal quality of the reference signals sent by the distant terminal device.

## Description

### CROSS-REFERENCE TO RELATED APPLICATIONS

This application claims priority to Chinese Patent Application No. 202311305163.6, filed with the China National Intellectual Property Administration on October 8, 2023 and entitled "COMMUNICATION METHOD AND COMMUNICATION APPARATUS", which is incorporated herein by reference in its entirety.

### TECHNICAL FIELD

This application relates to the field of wireless communication technologies, and in particular, to a communication method and a communication apparatus.

### BACKGROUND

As an independent reference signal, a sounding reference signal can be sent independently and can cover a large frequency band.

A network device estimates uplink channel quality based on the sounding reference signal, and allocates, to a terminal device based on the uplink channel quality, a resource for physical uplink shared channel (physical uplink shared channel, PUSCH) transmission. For a time division duplex (time division duplex, TDD) system, thanks to uplink-downlink channel reciprocity, the network device may estimate uplink channel quality based on a sounding reference signal, and allocate beamforming (beamforming) weights for a physical downlink shared channel (physical downlink shared channel, PDSCH) based on the uplink signal quality.

Given that resources used to send sounding reference signals are limited, when many terminal devices need to send sounding reference signals, a same resource may be allocated to multiple terminal devices for them to simultaneously send sounding reference signals. If these terminal devices boost their transmit power competitively, their sounding reference signals will interfere with each other. Especially, transmit power of a nearby terminal device causes severe interference to transmit power of a distant terminal device.

### SUMMARY

Embodiments of this application provide a communication method and a communication apparatus, to reduce mutual interference between different terminal devices when sending sounding reference signals.

According to a first aspect, an embodiment of this application provides a communication method. The method may be performed by a network device or a module (for example, a chip) in a network device. The method includes: determining a type of a first terminal device, where the type of the first terminal device is a nearby terminal device or a distant terminal device; and allocating, based on the type of the first terminal device, a first resource to the first terminal device from resources corresponding to the type of the first terminal device, where the first resource is used to send a reference signal.

In the foregoing solution, a network device allocates different resources to a nearby terminal device and a distant terminal device, thereby preventing a same resource from being simultaneously allocated to both the nearby terminal device and the distant terminal device. This reduces interference caused by reference signals sent by the nearby terminal device to those sent by the distant terminal device, consequently improving signal quality of the reference signals sent by the distant terminal device.

In a possible implementation method, the reference signal includes a sounding reference signal.

In a possible implementation method, the determining the type of the first terminal device includes: determining the type of the first terminal device based on uplink channel quality.

In the foregoing solution, the type of the first terminal device is determined based on the uplink channel quality, enabling accurate identification of the type of the first terminal device and facilitating allocation of an appropriate resource for transmitting a reference signal to the first terminal device.

In a possible implementation method, the method further includes: when the first terminal device is a terminal device that initially accesses a network, determining the uplink channel quality based on a demodulation reference signal from the first terminal device; or when the first terminal device is a terminal device that has accessed a network, determining the uplink channel quality based on the sounding reference signal from the first terminal device.

In a possible implementation method, the method further includes: grouping available resources into at least two groups of resources, where the at least two groups of resources include resources corresponding to the nearby terminal device and resources corresponding to the distant terminal device, each of the at least two groups of resources includes at least one resource block, and each of the at least one resource block occupies one time unit in a time domain and one comb resource in a frequency domain.

In a possible implementation method, the at least two groups of resources further include a resource shared by the nearby terminal device and the distant terminal device.

In a possible implementation method, the method further includes: determining resource search start positions respectively corresponding to a plurality of cells, where a time interval between resource search start positions corresponding to any two of the plurality of cells is greater than a first threshold; and starting to search for the available resources at the resource search start positions.

In the foregoing solution, because available resources in different cells are far away from each other in a time domain, resources that are used by terminal devices in different cells to send sounding reference signals are also far away from each other, reducing mutual interference and improving reference signal sending quality.

In a possible implementation method, the resources corresponding to the nearby terminal device are shared by nearby terminal devices in M cells, the resources corresponding to the distant terminal device are shared by distant terminal devices in N cells, and both M and N are positive integers.

The foregoing solution reduces mutual interference between cells in different groups and effectively improves reference signal sending quality.

In a possible implementation method, allocating the first resource to the first terminal device from the resources corresponding to the type of the first terminal device includes: allocating, based on a reference signal capability of the first terminal device, the first resource to the first terminal device from the resources corresponding to the type of the first terminal device.

In the foregoing solution, the network device allocates the first resource to the first terminal device based on the reference signal capability of the first terminal device, enabling allocation of an appropriate resource to the first terminal device.

In a possible implementation method, when the reference signal capability indicates that a plurality of antenna selection reference signal resource sets are supported, the first resource includes a plurality of semi-persistent antenna selection reference signal resource sets.

In the foregoing solution, an appropriate semi-persistent antenna selection reference signal resource set can be activated for the first terminal device, enhancing signal quality of a reference signal sent by the first terminal device on the activated semi-persistent antenna selection reference signal resource set.

In a possible implementation method, the method further includes: when the first terminal device is a mobile terminal device, activating a first semi-persistent antenna selection reference signal resource set, where the first semi-persistent antenna selection reference signal resource set is included in the plurality of semi-persistent antenna selection reference signal resource sets, and a frequency hopping multiple of the resource in the first semi-persistent antenna selection reference signal resource set is less than or equal to a second threshold; or when the first terminal device is a non-mobile terminal device, activating a second semi-persistent antenna selection reference signal resource set, where the second semi-persistent antenna selection reference signal resource set is included in the plurality of semi-persistent antenna selection reference signal resource sets, and a frequency hopping multiple of the resource in the second semi-persistent antenna selection reference signal resource set is greater than a second threshold.

In a possible implementation method, the method further includes: when the first terminal device is a nearby terminal device, activating a resource in a third semi-persistent antenna selection reference signal resource set, where the third semi-persistent antenna selection reference signal resource set is included in the plurality of semi-persistent antenna selection reference signal resource sets, and a frequency hopping multiple of the resource in the third semi-persistent antenna selection reference signal resource set is less than or equal to a third threshold; or when the first terminal device is a distant terminal device, activating a resource in a fourth semi-persistent antenna selection reference signal resource set, where the fourth semi-persistent antenna selection reference signal resource set is included in the plurality of semi-persistent antenna selection reference signal resource sets, and a frequency hopping multiple of the resource in the fourth semi-persistent antenna selection reference signal resource set is greater than a third threshold.

In a possible implementation method, when the reference signal capability indicates that one antenna selection reference signal resource set is supported, and a quantity of semi-persistent reference signal resources supported by the first terminal device is greater than or equal to a quantity of periodic antenna selection reference signal resources supported by the first terminal device, the first resource includes one semi-persistent antenna selection reference signal resource set.

In the foregoing solution, the network device may configure, for the first terminal device, a large quantity of resources used to send a reference signal, to help obtain channel states of reference signals from more antennas of the first terminal device.

In a possible implementation method, the method further includes: when a reference signal interference status of a cell accessed by the first terminal device is a low interference state, activating a resource in the semi-persistent antenna selection reference signal resource set in the first resource; or when a reference signal interference status of a cell accessed by the first terminal device is a medium interference state, and a service volume of the first terminal device is less than a first service volume threshold, deactivating a resource in the semi-persistent antenna selection reference signal resource set in the first resource; or when a reference signal interference status of a cell accessed by the first terminal device is a medium interference state, and a service volume of the first terminal device is greater than or equal to the first service volume threshold, activating a resource in the semi-persistent antenna selection reference signal resource set in the first resource; or when a reference signal interference status of a cell accessed by the first terminal device is a high interference state, and a service volume of the first terminal device is less than a second service volume threshold, deactivating a resource in the semi-persistent antenna selection reference signal resource set in the first resource; or when a reference signal interference status of a cell accessed by the first terminal device is a high interference state, and a service volume of the first terminal device is greater than or equal to the second service volume threshold, activating a resource in the semi-persistent antenna selection reference signal resource set in the first resource, where the second service volume threshold is greater than the first service volume threshold.

In the foregoing solution, the network device may monitor a cell-level interference status in real time, and periodically dynamically activate or deactivate, based on the interference status, the resource that is allocated to the terminal device and that is used to send the reference signal, to help activate, for the terminal device, an appropriate resource used to send the reference signal.

In a possible implementation method, when the reference signal capability indicates that one antenna selection reference signal resource set is supported, and a quantity of semi-persistent reference signal resources supported by the first terminal device is less than a quantity of periodic antenna selection reference signal resources supported by the first terminal device, the first resource includes a periodic antenna selection reference signal resource.

In the foregoing solution, the network device may configure, for the first terminal device, a large quantity of resources used to send a reference signal, to help obtain channel states of reference signals from more antennas of the first terminal device.

In a possible implementation method, the first resource further includes a long-periodicity codebook reference signal resource.

In the foregoing solution, the network device may configure the long-periodicity codebook reference signal resource for the first terminal device, to help improve stability of sending a reference signal by the first terminal device.

According to a second aspect, an embodiment of this application provides a communication apparatus. The apparatus may be a network device, or may be a module (for example, a chip) in a network device. The apparatus has a function of implementing any one of the implementation methods according to the first aspect. The function may be implemented by hardware, or may be implemented by hardware executing corresponding software. The hardware or the software includes one or more modules corresponding to the function.

According to a third aspect, an embodiment of this application provides a communication apparatus, including units or means (means) configured to perform steps of any one of the implementation methods according to the first aspect.

According to a fourth aspect, an embodiment of this application provides a communication apparatus, including a processor and an interface circuit. The processor is configured to communicate with another apparatus through the interface circuit, and perform any one of the implementation methods according to the first aspect. There are one or more processors.

Optionally, the communication apparatus may further include a memory configured to store computer instructions. The memory is coupled to the processor, and the processor executes the computer instructions stored in the memory, so that the apparatus performs any one of the implementation methods according to the first aspect.

According to a fifth aspect, an embodiment of this application further provides a computer program product. The computer program product includes a computer program or instructions. When the computer program or the instructions are run by a communication apparatus, any one of the implementation methods according to the first aspect is performed.

According to a sixth aspect, an embodiment of this application further provides a computer-readable storage medium. The computer-readable storage medium stores instructions, and when the instructions are run on a communication apparatus, any one of the implementation methods according to the first aspect is performed.

According to a seventh aspect, an embodiment of this application further provides a chip system, including a processor configured to perform any one of the implementation methods according to the first aspect.

### BRIEF DESCRIPTION OF DRAWINGS

FIG. 1(a) is a diagram of an architecture of a communication system to which an embodiment of this application is applied;
FIG. 1(b) is a diagram of a network device;
FIG. 2 is a schematic flowchart of a communication method according to an embodiment of this application;
FIG. 3 is an example diagram of resource grouping;
FIG. 4 is another example diagram of resource grouping;
FIG. 5 is an example diagram of a resource search start position;
FIG. 6A and FIG. 6B are an example diagram of cell grouping;
FIG. 7 is a schematic flowchart of another communication method according to an embodiment of this application;
FIG. 8 is an example diagram of resource allocation;
FIG. 9 is another example diagram of resource allocation;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

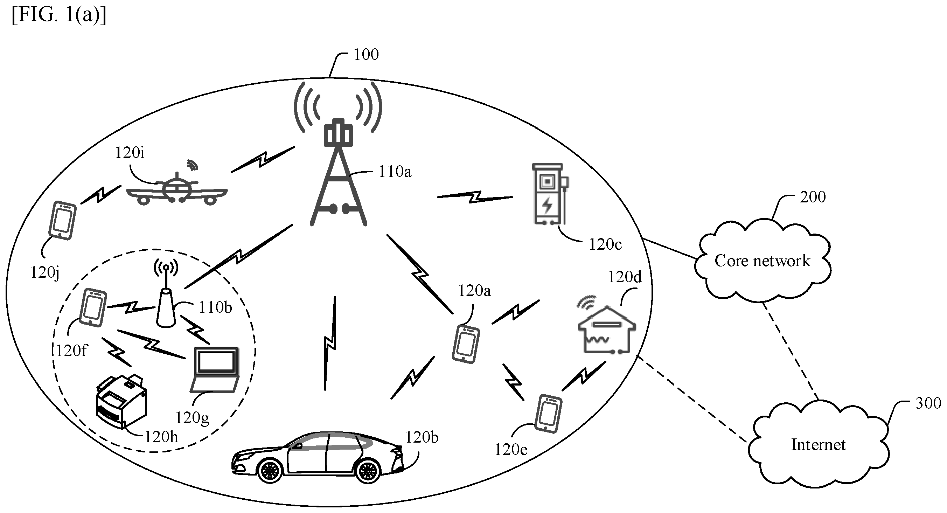

FIG. 1(a) is a diagram of an architecture of a communication system to which an embodiment of this application is applied. The communication system shown in FIG. 1(a) includes a radio access network 100 and a core network 200. Optionally, the communication system further includes an internet 300. The radio access network 100 may include at least one network device (for example, 110a and 110b in FIG. 1(a)), and may further include at least one terminal device (for example, 120a to 120j in FIG. 1(a)). The terminal device is connected to the network device in a wireless manner, and the network device is connected to the core network in a wireless or wired manner. A core network device and the network device may be different physical devices that are independent of each other, or functions of the core network device and logical functions of the network device may be integrated into a same physical device, or some functions of the core network device and some functions of the network device may be integrated into one physical device. Terminal devices may be connected to each other in a wired or wireless manner, and network devices may be connected to each other in a wired or wireless manner. FIG. 1(a) is only a diagram. The communication system may further include another network device, for example, may further include a wireless relay device and a wireless backhaul device, which are not shown in FIG. 1(a).

The network device is an access device for the terminal device to access the communication system in a wired or wireless manner. The network device may be a base station (base station), an evolved base station (evolved NodeB, eNodeB), a transmission reception point (transmission reception point, TRP), a next-generation base station (next-generation NodeB, gNB) in a 5th generation (5th generation, 5G) mobile communication system, a next-generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), may be a distributed unit (distributed unit, DU), or may be a radio unit (radio unit, RU). The network device may be a macro base station (for example, 110a in FIG. 1(a)), may be a micro base station or an indoor base station (for example, 110b in FIG. 1(a)), or may be a relay node, a donor node, or the like. A specific technology and a specific device form that are used by the network device are not limited in embodiments of this application.

The terminal device is a device with a wireless transceiver function, and may send a signal to the network device, or receive a signal from the network device. The terminal device includes but is not limited to a terminal apparatus, a terminal, user equipment (user equipment, UE), a mobile station, a mobile terminal, and the like. The terminal device may be widely used in various scenarios, for example, device-to-device (device-to-device, D2D), vehicle-to-everything (vehicle to everything, V2X) communication, machine-type communication (machine-type communication, MTC), internet of things (internet of things, IOT), virtual reality, augmented reality, industrial control, self-driving, telemedicine, smart grid, smart furniture, smart office, smart wearable, smart transportation, and smart city. The terminal device may be specifically a mobile phone, a tablet computer, a computer with a wireless transceiver function, a wearable device, a vehicle, an airplane, a ship, a robot, a robotic arm, a smart home device, or the like. A specific technology and a specific device form that are used by the terminal device are not limited in embodiments of this application.

The network device and the terminal device may be fixed at a location, or may be movable. The network device and the terminal device may be deployed on the land, including an indoor device, an outdoor device, a handheld device, or a vehicle-mounted device; may be deployed on the water; or may be deployed on an airplane, a balloon, and an artificial satellite. Application scenarios of the network device and the terminal device are not limited in embodiments of this application.

Roles of the network device and the terminal device may be relative. For example, a helicopter or an uncrewed aerial vehicle 120i in FIG. 1(a) may be configured as a mobile network device. For the terminal device 120j that accesses the radio access network 100 through 120i, the terminal device 120i is a network device. However, for the network device 110a, 120i is a terminal device. In other words, 110a and 120i communicate with each other according to a radio air interface protocol. Certainly, 110a and 120i may alternatively communicate with each other according to an interface protocol between network devices. In this case, for 110a, 120i is also a network device. Therefore, both the network device and the terminal device may be collectively referred to as a communication apparatus. 110a and 110b in FIG. 1(a) may be referred to as a communication apparatus having a function of a network device, and 120a to 120j in FIG. 1(a) may be referred to as a communication apparatus having a function of a terminal device.

Communication may be performed between the network device and the terminal device, between network devices, or between terminal devices by using a licensed spectrum, an unlicensed spectrum, or both a licensed spectrum and an unlicensed spectrum; may be performed by using a spectrum below 6 gigahertz (gigahertz, GHz); may be performed by using a spectrum above 6 GHz; or may be performed by using both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as smart grid, industrial control, intelligent transportation, and smart city. The function of the terminal device may alternatively be performed by a module (for example, a chip or a modem) in the terminal device, or may be performed by an apparatus including the function of the terminal device.

In this application, the network device sends a downlink signal or downlink information to the terminal device, where the downlink information is carried on a downlink channel; and the terminal device sends an uplink signal or uplink information to the network device, where the uplink information is carried on an uplink channel. To communicate with the network device, the terminal device needs to establish a wireless connection to a cell controlled by the network device. The cell that establishes the wireless connection to the terminal device is referred to as a serving cell of the terminal device.

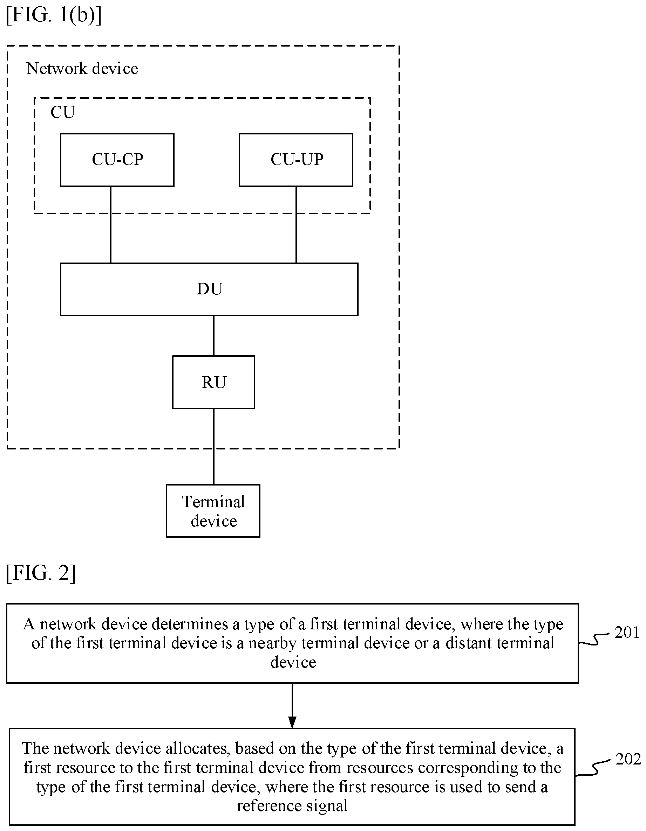

FIG. 1(b) is a diagram of a network device. As shown in FIG. 1(b), the network device includes one or more CUs, one or more DUs, and one or more RUs. For clarity, FIG. 1(b) shows only one CU, one DU, and one RU. The CU is configured to be connected to a core network and one or more DUs. Optionally, the CU may have some functions of the core network. The CU may include a CU-control plane (control plane, CP) and a CU-user plane (user plane, UP).

The CU and the DU may be configured based on a protocol layer function of a wireless network implemented by the CU and the DU. For example, the CU is configured to implement functions of a packet data convergence protocol (packet data convergence protocol, PDCP) layer and a protocol layer above the PDCP layer (for example, a radio resource control (radio resource control, RRC) layer and/or a service data adaptation protocol (service data adaptation protocol, SDAP) layer). The DU is configured to implement a function of a protocol layer below the PDCP layer (for example, a radio link control (radio link control, RLC) layer, a medium access control (medium access control, MAC) layer, and/or a physical (physical, PHY) layer). For another example, the CU is configured to implement a function of a protocol layer above a PDCP layer (for example, an RRC layer and/or an SDAP layer), and the DU is configured to implement a function of the PDCP layer and a protocol layer below the PDCP layer (for example, an RLC layer, a MAC layer, and/or a PHY layer).

The foregoing configuration of the CU and the DU is merely an example. Alternatively, functions of the CU and the DU may be configured as needed. For example, the CU or the DU may be configured to have functions of more protocol layers, or the CU or the DU may be configured to have some processing functions of protocol layers. For example, some functions of the RLC layer and functions of a protocol layer above the RLC layer are set on the CU, and remaining functions of the RLC layer and functions of a protocol layer below the RLC layer are set on the DU. For another example, the functions of the CU or the DU may be divided based on service types or other system requirements. For example, division may be performed based on a delay. In this case, functions whose processing time needs to satisfy a small delay requirement are set on the DU, and functions whose processing time does not need to satisfy the delay requirement are set on the CU.

The DU and the RU may work together to implement a function of the PHY layer. One DU may be connected to one or more RUs. Functions of the DU and the RU may be configured into a plurality of manners based on a design. For example, the DU is configured to implement a baseband function, and the RU is configured to implement an intermediate radio frequency function. For another example, the DU is configured to implement a higher-layer function of the PHY layer, and the RU is configured to implement a lower-layer function of the PHY layer or implement the lower-layer function and a radio frequency function. The higher-layer function of the physical layer may include a portion of functions of the physical layer, and the portion of functions is closer to the MAC layer. The lower-layer function of the physical layer may include another portion of functions of the physical layer, and the another portion of functions is closer to an intermediate radio frequency side.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU, the DU, or the RU may alternatively have different names, but a person skilled in the art may understand meanings of the names. For example, in an ORAN system, a CU may also be referred to as an O-CU (open CU), a DU may also be referred to as an O-DU, and an RU may also be referred to as an O-RU. Any one of the CU (or the CU-CP or the CU-UP), the DU, and the RU in this application may be implemented by using a software module, a hardware module, or a combination of a software module and a hardware module.

Because resources used to send sounding reference signals are limited, when a large quantity of terminal devices need to send sounding reference signals, a same resource may be allocated to a plurality of terminal devices for sending sounding reference signals. If transmit power increases because the plurality of terminal devices compete against each other, the sounding reference signals of the plurality of terminal devices interfere with each other. Especially, transmit power of a nearby terminal device causes severe interference to transmit power of a distant terminal device. Therefore, when a plurality of terminal devices simultaneously send sounding reference signals, how to reduce mutual interference needs to be resolved.

To resolve this problem, this application provides corresponding embodiments. The following provides detailed descriptions.

FIG. 2 is a schematic flowchart of a communication method according to an embodiment of this application. The method is performed by a network device, a CU, a DU, or an RU, or is performed by a module (for example, a chip) of a network device, a CU, a DU, or an RU. The following uses an example in which the network device performs the method for description.

The method includes the following steps.

Step 201: The network device determines a type of a first terminal device, where the type of the first terminal device is a nearby terminal device or a distant terminal device.

In this embodiment of this application, terminal devices are classified into two types: a nearby terminal device, and a distant terminal device. Uplink channel quality of the nearby terminal device is better than uplink channel quality of the distant terminal device. For example, when uplink channel quality of the terminal device is greater than a channel quality threshold, it is determined that the terminal device is a nearby terminal device; when uplink channel quality of the terminal device is less than a channel quality threshold, it is determined that the terminal device is a distant terminal device; or when uplink channel quality of the terminal device is equal to a channel quality threshold, it is determined that the terminal device is a nearby terminal device or a distant terminal device. Therefore, the network device may determine the type of the first terminal device based on uplink channel quality of the first terminal device. A specific value of the channel quality threshold may be set based on an actual requirement. This is not limited in this application.

For example, when the first terminal device is a terminal device that initially accesses a network, the network device determines the uplink channel quality of the first terminal device based on a reference signal sent by the first terminal device. In a 5G network, the reference signal may be a demodulation reference signal (demodulation reference signal, DMRS). Alternatively, when the first terminal device is a terminal device that has accessed a network, the network device determines the uplink channel quality of the first terminal device based on a reference signal from the first terminal device. In a 5G network, the reference signal may be a sounding reference signal (sounding reference signal, SRS).

Step 202: The network device allocates, based on the type of the first terminal device, a first resource to the first terminal device from resources corresponding to the type of the first terminal device.

The first resource is used to send the reference signal. For example, the reference signal includes a sounding reference signal or a demodulation reference signal.

In other words, if the first terminal device is a nearby terminal device, the network device allocates the first resource to the first terminal device from resources corresponding to the nearby terminal device; or if the first terminal device is a distant terminal device, the network device allocates the first resource to the first terminal device from resources corresponding to the distant terminal device.

According to the method, the network device allocates different resources to the nearby terminal device and the distant terminal device, thereby preventing a same resource from being simultaneously allocated to both the nearby terminal device and the distant terminal device. This reduces interference caused by reference signals sent by the nearby terminal device to those sent by the distant terminal device, consequently improving signal quality of the reference signals sent by the distant terminal device. The signal quality may be measured by a signal to interference plus noise ratio (signal to interference plus noise ratio, SINR).

In an implementation method, the network device groups available resources into at least two groups of resources, where the at least two groups of resources include resources corresponding to the nearby terminal device and resources corresponding to the distant terminal device, each of the at least two groups of resources includes at least one resource block (resource block, RB), and each of the at least one resource block occupies one time unit in a time domain and occupies one comb (comb) resource in a frequency domain. The time unit may be a symbol (symbol), a slot (slot), or the like.

Optionally, the at least two groups of resources further include a resource shared by the nearby terminal device and the distant terminal device. The shared resource may also be referred to as a common flexible available resource. The common flexible available resource may be used by the nearby terminal device or the distant terminal device.

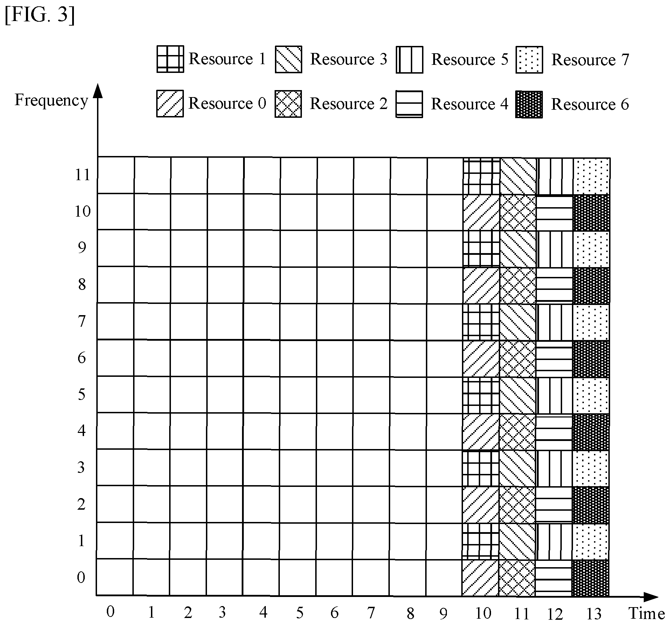

FIG. 3 is an example diagram of resource grouping. In this example, each block in the figure occupies one symbol in time and one comb resource in frequency. It is assumed that available resources found by the network device occupy symbols 10 to 13 in time, and occupy comb resources 0 and 1 in frequency. The comb resource 0 indicates that each RB occupies subcarriers 0, 2, 4, 6, 8, and 10 on an RB for sending a reference signal; and the comb resource 1 indicates that each RB occupies subcarriers 1, 3, 5, 7, 9, and 11 on an RB for sending a reference signal. For example, a time unit is one symbol, and comb=2. The available resources shown in the figure may be grouped into eight parts of resources, which are respectively as follows:
resource 0: occupies a symbol 10 in time, and occupies a comb resource 0 in frequency;
resource 1: occupies a symbol 10 in time, and occupies a comb resource 1 in frequency;
resource 2: occupies a symbol 11 in time, and occupies a comb resource 0 in frequency;
resource 3: occupies a symbol 11 in time, and occupies a comb resource 1 in frequency;
resource 4: occupies a symbol 12 in time, and occupies a comb resource 0 in frequency;
resource 5: occupies a symbol 12 in time, and occupies a comb resource 1 in frequency;
resource 6: occupies a symbol 13 in time, and occupies a comb resource 0 in frequency; and
resource 7: occupies a symbol 13 in time, and occupies a comb resource 1 in frequency.

For example, the eight parts of resources may be grouped into resources corresponding to the nearby terminal device and resources corresponding to the distant terminal device. For example, the resources 0 to 3 are resources corresponding to the nearby terminal device, and the resources 4 to 7 are resources corresponding to the distant terminal device.

For example, the eight parts of resources may be grouped into resources corresponding to the nearby terminal device, resources corresponding to the distant terminal device, and a common flexible available resource. For example, the resources 0 to 2 are resources corresponding to the nearby terminal device, the resources 3 to 5 are resources corresponding to the distant terminal device, and the resources 6 and 7 are common flexible available resources.

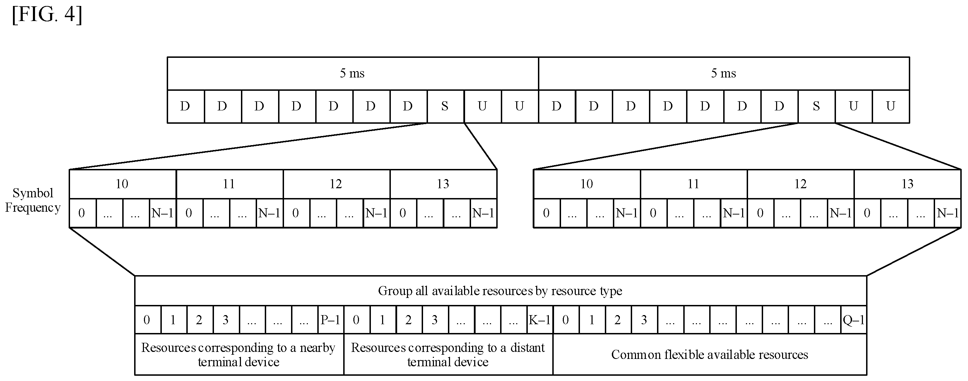

FIG. 4 is another example diagram of resource grouping. In this example, each slot occupies 0.5 milliseconds (ms). Therefore, 10 consecutive slots occupy 5 ms. The 10 slots include seven downlink slots (represented by a letter D in the figure), one special slot (represented by S in the figure), and two uplink slots (represented by U in the figure). Each slot includes 14 symbols. In an example in FIG. 4, it is assumed that available resources found by the network device occupy symbols 10 to 13 in each of the two special slots, and occupies comb resources 0 and 1 in frequency, where N is an integer greater than 1. The network device groups a plurality of symbol resources of the available resources to obtain (P+K+Q) parts of resources. Each portion of resources occupies one symbol in time, and occupies a comb resource in frequency. The comb resource occupies L subcarriers, where L is related to a value of comb. Specifically, for a specific form of each portion of resources, refer to related descriptions of the example in FIG. 3. P, K, Q, and L are all positive integers. The network device groups the (P+K+Q) parts of resources as follows:
the P parts of resources are used as resources corresponding to the nearby terminal device;
the K parts of resources are used as resources corresponding to the distant terminal device; and
the Q parts of resources are used as common flexible available resources.

In an implementation method, in this embodiment of this application, the network device may allocate a resource to the terminal device based on a frequency hopping multiple of the resource. The frequency hopping multiple is a quantity of times that a reference signal needs to be sent to cover a total bandwidth of a resource used to send the reference signal. For example, a total bandwidth of a resource used to send a reference signal is equal to 216 RBs, and 36 RBs are occupied each time the reference signal is sent. In this case, the reference signal needs to be sent for six times to cover the total bandwidth of the resource used to send the reference signal. In other words, a frequency hopping multiple is equal to 6.

For example, the network device may allocate a resource with a large frequency hopping multiple as the resources corresponding to the distant terminal device, and allocate a resource with a small frequency hopping multiple as the resources corresponding to the nearby terminal device. For example, when a frequency hopping multiple of a portion of resources is greater than a preset frequency hopping multiple threshold, the network device groups the portion of resources as the resources corresponding to the distant terminal device; when a frequency hopping multiple of a portion of resources is less than a preset frequency hopping multiple threshold, the network device groups the portion of resources as the resources corresponding to the nearby terminal device; or when a frequency hopping multiple of a portion of resources is equal to a preset frequency hopping multiple threshold, the network device groups the portion of resources as the resources corresponding to the distant terminal device or the resources corresponding to the nearby terminal device. A larger frequency hopping multiple of a resource indicates a larger RSRP of a reference signal received by the network device when the terminal device sends the reference signal on the resource. Therefore, the resource with the larger frequency hopping multiple is independently allocated to the distant terminal device, so that interference to the reference signal sent by the distant terminal device is reduced, and signal quality of the reference signal sent by the distant terminal device is improved.

In this embodiment of this application, before performing resource grouping, the network device needs to search for available resources, where the available resources are idle resources that can be used to send reference signals.

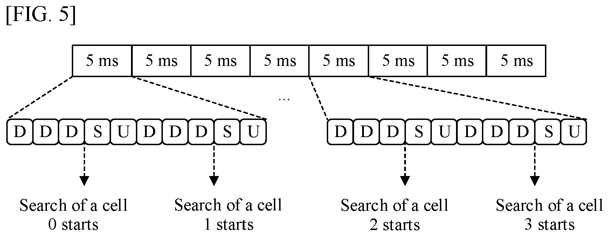

In an implementation method, in this embodiment of this application, the network device may randomize a cell-level resource search start position, and different cells determine cell-level resource search start positions based on cell identifiers. For example, the network device determines resource search start positions respectively corresponding to a plurality of cells, where a time interval between resource search start positions corresponding to any two of the plurality of cells is greater than a first threshold, and then the network device starts to search for the available resources at the resource search start positions. In other words, terminal devices served by different cells send reference signals by using different time-frequency resources. FIG. 5 is an example diagram of a resource search start position. In this example, the first threshold is four slots. A resource search start position corresponding to a cell 0 is separated by five slots from a resource search start position corresponding to a cell 1. The resource search start position corresponding to the cell 1 is separated by 35 slots from a resource search start position corresponding to a cell 2. The resource search start position corresponding to the cell 2 is separated by five slots from a resource search start position corresponding to a cell 3. Based on this implementation, resource grouping is separately performed for each cell, and resources of different cells are far away from each other, so that mutual interference can be avoided when terminal devices in different cells send reference signals. FIG. 5 is used as an example. After the network device searches for available resources in the cell 0, the cell 1, the cell 2, and the cell 3, for found available resources in the cell 0, the network device groups the found available resources into resources corresponding to a nearby terminal device in the cell 0 and resources corresponding to a distant terminal device in the cell 0; for found available resources in the cell 1, the network device groups the found available resources into resources corresponding to a nearby terminal device in the cell 1 and resources corresponding to a distant terminal device in the cell 1; and the network device performs similar operations on the cell 2 and the cell 3. Because available resources in different cells are far away from each other in a time domain, resources that are used by terminal devices in different cells to send sounding reference signals are also far away from each other, reducing mutual interference and improving reference signal sending quality.

In another implementation method, in this embodiment of this application, the network device may alternatively group a plurality of cells, and terminal devices in cells in a same group share a same resource used to send a sounding reference signal. For example, a group includes M cells, and nearby terminal devices in the M cells share resources corresponding to the nearby terminal devices. Another group includes N cells, and distant terminal devices in the N cells share resources corresponding to the distant terminal devices. Both M and N are positive integers, and M and N may be equal or different. Based on this implementation, mutual interference between cells in different groups can be reduced, and reference signal sending quality can be effectively improved.

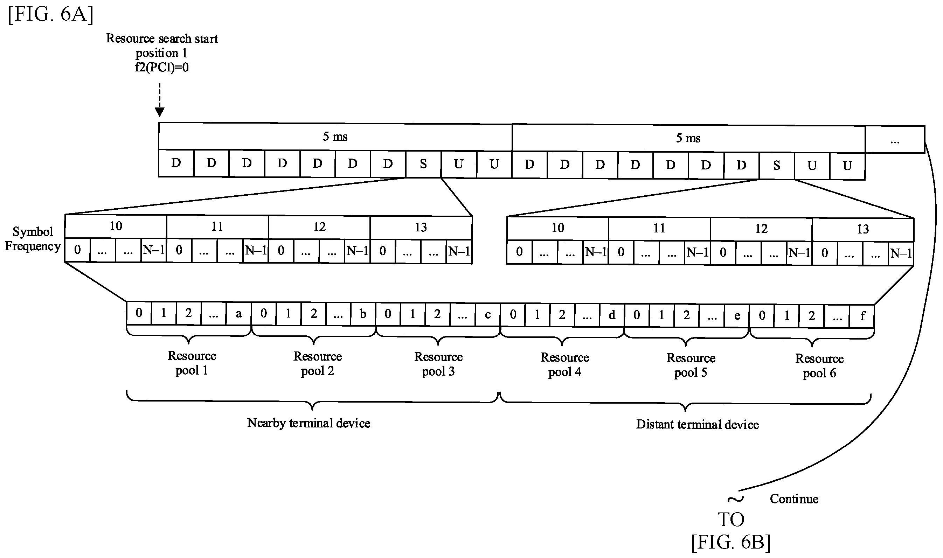

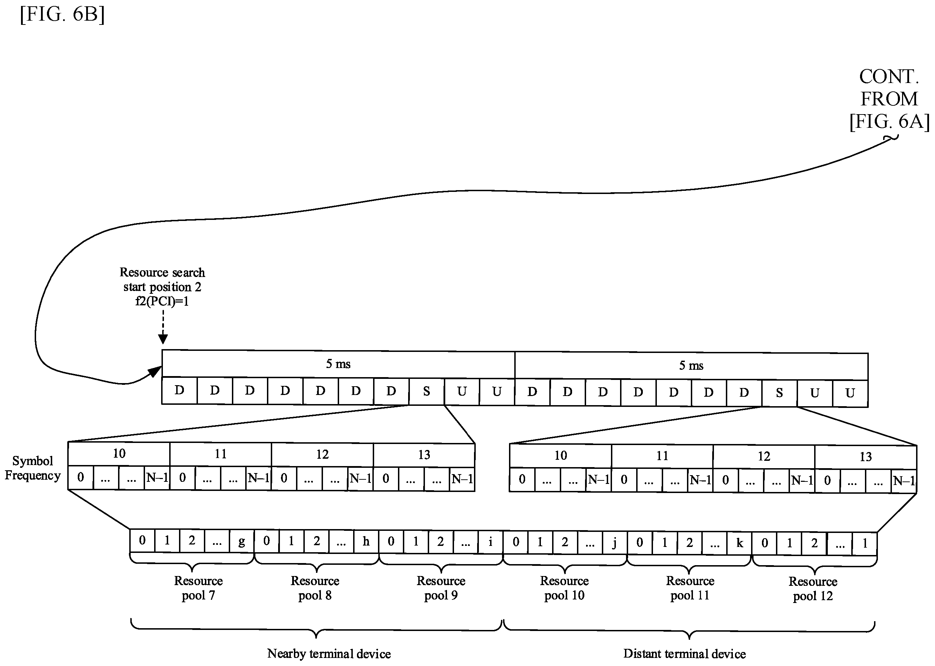

It should be noted that, in this embodiment of this application, when grouping cells, the network device may perform grouping once, or may perform grouping a plurality of times. For example, after grouping is performed for a first time, different cells in each group are grouped again, to obtain subgroups of each group. It should be understood that a minimum group may include one cell, or may include a plurality of cells. The following provides descriptions by using an example. FIG. 6A and FIG. 6B are an example diagram of cell grouping. In this example, grouping is performed for a first time according to a function f1, and grouping is performed for a second time according to a function f2, where f1(PCI)=PCI mod 3, and f2(PCI)=PCI mod 2. PCI is short for physical cell identifier (physical cell identifier), and mod indicates a modulo function.

Therefore, if a PCI of a cell meets PCI mod 3=0, the PCI of the cell belongs to a group 1. For a PCI in the group 1, if PCI mod 2=0, the PCI of the cell belongs to a group 1-1; or if PCI mod 2=1, the PCI of the cell belongs to a group 1-2. In other words, the PCI in the group 1-1 meets: PCI mod 3=0 and PCI mod 2=0, and the PCI in the group 1-2 meets: PCI mod 3=0 and PCI mod 2=1.

If a PCI of a cell meets PCI mod 3=1, the PCI of the cell belongs to a group 2. For a PCI in the group 2, if PCI mod 2=0, the PCI of the cell belongs to a group 2-1; or if PCI mod 2=1, the PCI of the cell belongs to a group 2-2. In other words, the PCI in the group 2-1 meets: PCI mod 3=1 and PCI mod 2=0, and the PCI in the group 2-2 meets: PCI mod 3=1 and PCI mod 2=1.

If a PCI of a cell meets PCI mod 3=2, the PCI of the cell belongs to a group 3. For a PCI in the group 3, if PCI mod 2=0, the PCI of the cell belongs to a group 3-1; or if PCI mod 2=1, the PCI of the cell belongs to a group 3-2. In other words, the PCI in the group 3-1 meets: PCI mod 3=2 and PCI mod 2=0, and the PCI in the group 3-2 meets: PCI mod 3=2 and PCI mod 2=1.

Results of grouping for two times are shown in Table 1.

**Table 1**

| First grouping | Second grouping | PCI of a cell |
|---|---|---|
| Group 1 (PCI mod 3=0) | Subgroup 1-1 (PCI mod 2=0) | 0, 6, 12, ... |
| | Subgroup 1-2 (PCI mod 2=1) | 3, 9, 15, ... |
| Group 2 (PCI mod 3=1) | Subgroup 2-1 (PCI mod 2=0) | 4, 10, 16, ... |
| | Subgroup 2-2 (PCI mod 2=1) | 1, 7, 13, ... |
| Group 3 (PCI mod 3=2) | Subgroup 3-1 (PCI mod 2=0) | 2, 8, 14, ... |
| | Subgroup 3-2 (PCI mod 2=1) | 5, 11, 17, ... |

As shown in Table 1, the PCIs in the group 1 include 0, 3, 6, 9, 12, 15, ..., and the group 1 is further divided into two subgroups. PCIs in the subgroup 1-1 include 0, 6, 12, ..., and PCIs in the subgroup 1-2 include 3, 9, 15, .... The PCIs in the group 2 include 1, 4, 7, 10, 13, 16, ..., and the group 2 is further divided into two subgroups. PCIs in the subgroup 2-1 include 4, 10, 16, ..., and PCIs in the subgroup 2-2 include 1, 7, 13, .... The PCIs in the group 3 include 2, 5, 8, 11, 14, 17, ..., and the group 3 is further divided into two subgroups. PCIs in the subgroup 3-1 include 2, 8, 14, ..., and PCIs in the subgroup 3-2 include 5, 11, 17, ....

As shown in FIG. 6A and FIG. 6B, when a value of a PCI of a cell accessed by the first terminal device is an even number (that is, f2(PCI)=0), the network device searches, starting from a resource search start position 1, for an available resource by using f1(PCI). If f1(PCI)=0, and the first terminal device is a nearby terminal device, the first resource is allocated to the terminal device from a resource pool 1. If f1(PCI)=1, and the first terminal device is a nearby terminal device, the first resource is allocated to the terminal device from a resource pool 2. If f1(PCI)=2, and the first terminal device is a nearby terminal device, the first resource is allocated to the terminal device from a resource pool 3. If f1(PCI)=0, and the first terminal device is a distant terminal device, the first resource is allocated to the terminal device from a resource pool 4. If f1(PCI)=1, and the first terminal device is a distant terminal device, the first resource is allocated to the terminal device from a resource pool 5. If f1(PCI)=2, and the first terminal device is a distant terminal device, the first resource is allocated to the terminal device from a resource pool 6.

When a value of a PCI of a cell accessed by the first terminal device is an odd number (that is, f2(PCI)=1), the network device searches, starting from a resource search start position 2, for an available resource by using f1(PCI). If f1(PCI)=0, and the first terminal device is a nearby terminal device, the first resource is allocated to the terminal device from a resource pool 7. If f1(PCI)=1, and the first terminal device is a nearby terminal device, the first resource is allocated to the terminal device from a resource pool 8. If f1(PCI)=2, and the first terminal device is a nearby terminal device, the first resource is allocated to the terminal device from a resource pool 9. If f1(PCI)=0, and the first terminal device is a distant terminal device, the first resource is allocated to the terminal device from a resource pool 10. If f1(PCI)=1, and the first terminal device is a distant terminal device, the first resource is allocated to the terminal device from a resource pool 11. If f1(PCI)=2, and the first terminal device is a distant terminal device, the first resource is allocated to the terminal device from a resource pool 12.

It should be noted that a quantity of resources included in each of the resource pools 1 to 12 is not limited, and may be specifically allocated by the network device. For example, the network device allocates resources based on a quantity of cells corresponding to the resource pool and/or a quantity of terminal devices in the cell. A quantity of resources included in different resource pools may be the same or may be different.

The foregoing solution of grouping cells may also be understood as grouping resources to obtain a plurality of groups of resources. Each group of resources is allocated to one or more cells, and is used by a terminal device in the cell to send a reference signal. In addition, a same group of resources may be further divided into two subgroups, which are respectively used by a nearby terminal device of a cell in the group to send a reference signal, and used by a distant terminal device of a cell in the group to send a reference signal.

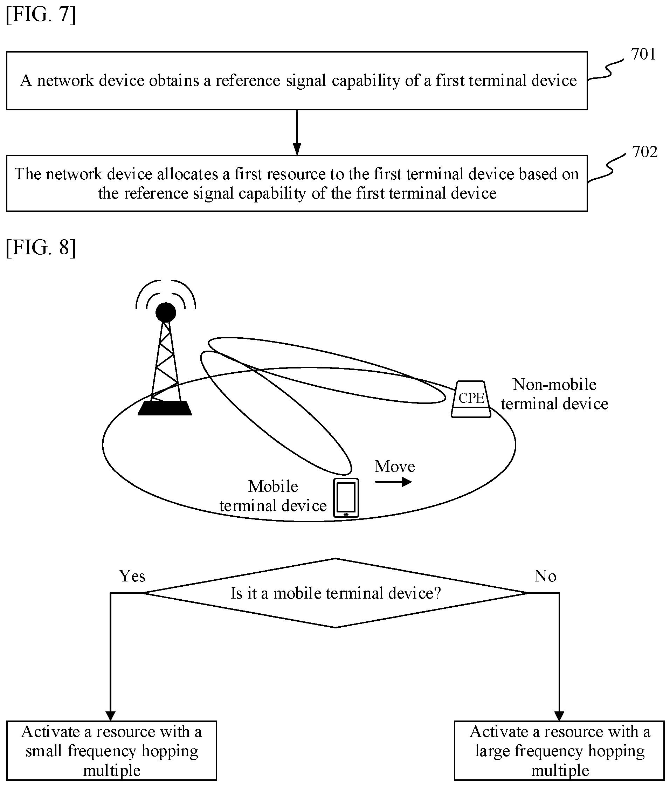

FIG. 7 is a schematic flowchart of another communication method according to an embodiment of this application. The method is performed by a network device or a module (for example, a chip) in a network device. The following uses an example in which the network device performs the method for description. The embodiment in FIG. 7 may also be independently implemented, or may be implemented with reference to the embodiment in FIG. 2.

The method includes the following steps.

Step 701: The network device obtains a reference signal capability of a first terminal device.

For example, the network device obtains capability information of the first terminal device, where the capability information includes the reference signal capability. For example, the first terminal device may report the capability information of the first terminal device to the network device, or the network device obtains the capability information of the first terminal device from a core network, or the network device obtains the capability information of the first terminal device from another network device. This is not limited in this application.

For example, the reference signal capability indicates a capability of the first terminal device to support antennas in sequentially sending reference signals. The reference signal capability may be specifically an SRS capability. For example, the reference signal capability is indicated by a parameter supportedSRS-TxPortSwitch, and a value of the parameter includes t1r1, t1r2, t1r4, t2r2, t2r4, t4r4, or t1r4-t2r4. The letter t represents a transmit antenna, and the letter r represents a receive antenna. t1r1 indicates that one antenna for transmitting and one antenna for receiving are supported, and t1r2 indicates that one antenna for transmitting and two antennas for receiving are supported. Indications of t1r4, t2r2, t2r4, and t4r4 are similar. t1r4-t2r4 indicates that the terminal device supports both t1r4 and t2r4 and can be switched between t1r4 and t2r4.

Step 702: The network device allocates a first resource to the first terminal device based on the reference signal capability of the first terminal device.

For example, step 702 may be specifically: The network device allocates, based on the reference signal capability of the first terminal device, the first resource to the first terminal device from resources corresponding to a type of the first terminal device. The type of the first terminal device is a nearby terminal device or a distant terminal device. For specific descriptions of resources corresponding to the nearby terminal device and resources corresponding to the distant terminal device, refer to the description in the embodiment in FIG. 2

In the foregoing solution, the network device allocates the first resource to the first terminal device based on the reference signal capability of the first terminal device, so that an appropriate resource can be allocated to the first terminal device.

In an implementation method, the first resource allocated by the network device to the first terminal device is shown in Table 2.

**Table 2**

| Reference signal capability | Condition | First resource | |
|---|---|---|---|
| Support one antenna selection reference signal resource set | Semi-persistent capability ≥ Periodic capability | One semi-persistent antenna selection reference signal resource set | Long-periodicity codebook reference signal resource |
| | Semi-persistent capability < Periodic capability | Periodic antenna selection reference signal resource | |
| Support a plurality of antenna selection reference signal resource sets | | A plurality of semi-persistent antenna selection reference signal resource sets | |

The semi-persistent antenna selection (antenna selection, AS) reference signal resource set refers to a semi-persistently configured resource set used to send a reference signal, and the semi-persistent antenna selection reference signal resource set needs to be activated by using additional dynamic signaling. For example, the semi-persistent antenna selection reference signal resource set may be specifically an SRS resource whose resourceTyper is configured as semi-persistent and whose usage is configured as antennaSwitching in RRC signaling.

The periodic antenna selection (antenna selection, AS) reference signal resource refers to a pre-configured resource used to send a reference signal periodically, and the periodic antenna selection reference signal resource does not need to be activated by using additional dynamic signaling. For example, the periodic antenna selection reference signal resource may be specifically an SRS resource whose resourceTyper is configured as periodic and whose usage is configured as antennaSwitching in RRC signaling.

A long-periodicity codebook (codebook, CB) reference signal resource is a preconfigured resource used to send a reference signal periodically, the long-periodicity codebook reference signal resource does not need to be activated by using additional dynamic signaling, and a periodicity of the long-periodicity codebook reference signal resource is greater than a resource of the periodic antenna selection reference signal resource. For example, the periodic antenna selection reference signal resource may be specifically an SRS resource whose resourceTyper is configured as periodic and whose usage is configured as codebook in RRC signaling.

As shown in Table 2, there are the following three cases.

Case 1: When the reference signal capability of the first terminal device indicates that the first terminal device supports a plurality of antenna selection reference signal resource sets, the first resource allocated by the network device to the first terminal device includes a plurality of semi-persistent antenna selection reference signal resource sets. Optionally, the first resource further includes a long-periodicity codebook reference signal resource.

In Case 1, the first terminal device may be specifically a terminal device that supports an R17 (Release 17) version.

In Case 1, a plurality of semi-persistent antenna selection reference signal resource sets are allocated to the first terminal device, and each semi-persistent antenna selection reference signal resource set includes one or more semi-persistent antenna selection reference signal resources. Subsequently, a resource in one of the plurality of semi-persistent antenna selection reference signal resource sets may be activated for the first terminal device based on a requirement. For example, the plurality of semi-persistent antenna selection reference signal resource sets respectively correspond to different frequency hopping multiples. When the first terminal device is a nearby terminal device, the network device activates a resource in a semi-persistent antenna selection reference signal resource set that is in the plurality of semi-persistent antenna selection reference signal resource sets and that has a small frequency hopping multiple. Because the frequency hopping multiple is small, a reference signal that can be sent by the first terminal device can quickly cover a total bandwidth of a resource used to send the reference signal, and a channel status of the first terminal device on the activated semi-persistent antenna selection reference signal resource may be obtained in time. When the first terminal device is a distant terminal device, the network device activates a resource in a semi-persistent antenna selection reference signal resource set that is in the plurality of semi-persistent antenna selection reference signal resource sets and that has a large frequency hopping multiple. Because the frequency hopping multiple is large, RSRP of a reference signal sent by the first terminal device on the activated semi-persistent antenna selection reference signal resource set can be increased, so that the network device can accurately receive the reference signal.

Case 2: When the reference signal capability of the first terminal device indicates that one antenna selection reference signal resource set is supported, and a quantity of semi-persistent reference signal resources supported by the first terminal device is greater than or equal to a quantity of periodic antenna selection reference signal resources supported by the first terminal device, the first resource allocated by the network device to the first terminal device includes one semi-persistent antenna selection reference signal resource set. Optionally, the first resource further includes a long-periodicity codebook reference signal resource.

The quantity of semi-persistent reference signal resources supported by the first terminal device is indicated by the semi-persistent capability of the first terminal device, and the quantity of periodic antenna selection reference signal resources supported by the first terminal device is indicated by the periodic capability of the first terminal device. Therefore, that the quantity of semi-persistent reference signal resources supported by the first terminal device is greater than or equal to the quantity of periodic antenna selection reference signal resources supported by the first terminal device may be understood as that the semi-persistent capability is greater than or equal to the periodic capability.

In Case 2, the first terminal device may be specifically a terminal device that supports an R15 version or an R16 version.

For Case 2, the network device may configure, for the first terminal device, a large quantity of resources used to send a reference signal, to help obtain channel states of reference signals from more antennas of the first terminal device.

Case 3: When the reference signal capability of the first terminal device indicates that one antenna selection reference signal resource set is supported, and a quantity of semi-persistent reference signal resources supported by the first terminal device is less than a quantity of periodic antenna selection reference signal resources supported by the first terminal device, the first resource allocated by the network device to the first terminal device includes a periodic antenna selection reference signal resource. The first resource further includes a long-periodicity codebook reference signal resource.

For Case 3, the network device may configure, for the first terminal device, a large quantity of resources used to send a reference signal, to help obtain channel states of reference signals from more antennas of the first terminal device.

In Case 3, the first terminal device may be specifically a terminal device that supports an R15 version or an R16 version.

For Case 1, the network device allocates a plurality of semi-persistent antenna selection reference signal resource sets to the first terminal device, and the plurality of semi-persistent antenna selection reference signal resource sets may respectively correspond to different frequency hopping multiples. The network device may activate a resource in a corresponding semi-persistent antenna selection reference signal resource set for the first terminal device based on the information about the first terminal device (for example, whether the first terminal device is a mobile terminal device or whether the first terminal device is a nearby terminal device).

FIG. 8 is an example diagram of resource allocation. For example, when the first terminal device is a mobile terminal device, the network device activates a resource in a first semi-persistent antenna selection reference signal resource set in the plurality of semi-persistent antenna selection reference signal resource sets, where a frequency hopping multiple of the resource in the first semi-persistent antenna selection reference signal resource set is less than or equal to a second threshold. When the first terminal device is a non-mobile terminal device, the network device activates a resource in a second semi-persistent antenna selection reference signal resource set in the plurality of semi-persistent antenna selection reference signal resource sets, where a frequency hopping multiple of the resource in the second semi-persistent antenna selection reference signal resource set is greater than a second threshold. It may be understood that when the first terminal device is a mobile terminal device, the network device activates a resource with a small frequency hopping multiple for the first terminal device, so that a reference signal that can be sent by the first terminal device can quickly cover a total bandwidth of a resource used to send the reference signal, and a channel status change can be tracked in time. When the first terminal device is a non-mobile terminal device, the network device activates a resource with a large frequency hopping multiple for the first terminal device, so that a quantity of RBs occupied for sending the reference signal each time can be reduced, reference signal power on each RB is increased, and reliability of sending the reference signal is improved.

In this application, the mobile terminal device may be understood as a mobile terminal device, or may be understood as a terminal device whose moving rate is higher than a threshold. Correspondingly, the non-mobile terminal device may be understood as a static terminal device, or may be understood as a terminal device whose moving rate is lower than or equal to a threshold.

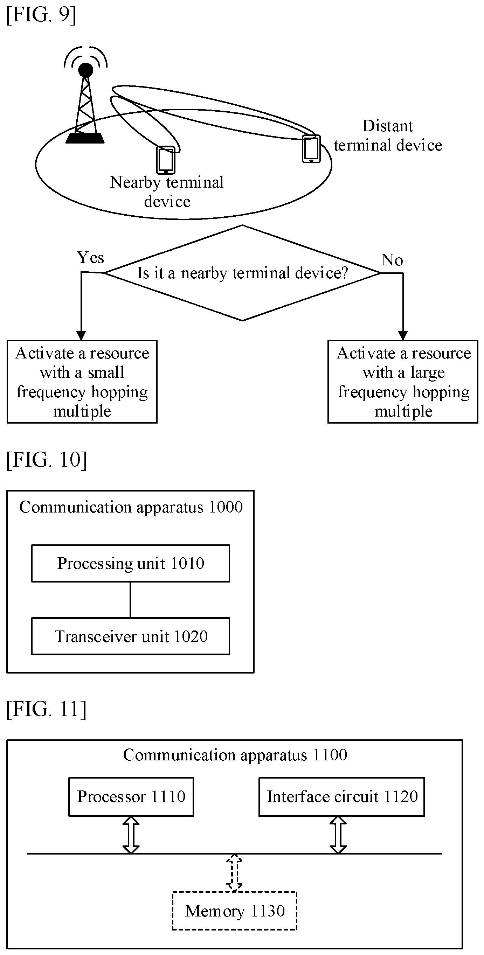

FIG. 9 is another example diagram of resource allocation. For example, when the first terminal device is a nearby terminal device, the network device activates a resource in a third semi-persistent antenna selection reference signal resource set in the plurality of semi-persistent antenna selection reference signal resource sets, where a frequency hopping multiple of the resource in the third semi-persistent antenna selection reference signal resource set is less than or equal to a third threshold. Because the frequency hopping multiple is small, a reference signal that can be sent by the first terminal device can quickly cover a total bandwidth of a resource used to send the reference signal, and a channel status of the first terminal device on the activated semi-persistent antenna selection reference signal resource may be obtained in time. For example, when the first terminal device is a distant terminal device, the network device activates a resource in a fourth semi-persistent antenna selection reference signal resource set in the plurality of semi-persistent antenna selection reference signal resource sets, where a frequency hopping multiple of the resource in the fourth semi-persistent antenna selection reference signal resource set is greater than a third threshold. Because the frequency hopping multiple is large, RSRP of a reference signal sent by the first terminal device on the activated semi-persistent antenna selection reference signal resource set can be increased, so that the network device can accurately receive the reference signal.

In another implementation method, for any one of Case 1 to Case 3, the network device may monitor a cell-level interference status in real time, and periodically dynamically activate or deactivate, based on the interference status, the resource that is allocated to the terminal device and that is used to send the reference signal, to help activate, for the terminal device, an appropriate resource used to send the reference signal.

For example, a cell (referred to as a cell 1 below) accessed by the first terminal device is used as an example. An interference degree value may be used to measure an interference status, and the interference degree value indicates an interference degree of the cell 1 to a neighboring cell. The interference status is as follows:
an interference degree value less than an interference degree threshold 1 indicates a low interference state;
an interference degree value equal to the interference degree threshold 1 indicates a low interference state or a medium interference state;
an interference degree value greater than the interference degree threshold 1 and less than an interference degree threshold 2 indicates a medium interference state;
an interference degree value equal to the interference degree threshold 2 indicates a medium interference state or a high interference state; and
an interference degree value greater than the interference degree threshold 2 indicates a high interference state.

The following describes cases a, b, and c respectively.

Case a: When the reference signal interference status of the cell 1 is the low interference state, a resource in a semi-persistent antenna selection reference signal resource set of a terminal device in the cell 1 is activated.

A first terminal device in the cell 1 is used as an example. The network device activates the resource in the semi-persistent antenna selection reference signal resource set in the first resource allocated to the first terminal device.

Case b: When the reference signal interference status of the cell 1 is the medium interference state, it is determined, based on a service volume of a terminal device in the cell 1, to activate or deactivate a resource in a semi-persistent antenna selection reference signal resource set.

For example, when the reference signal interference status of the cell 1 is the medium interference state, a resource in the semi-persistent antenna selection reference signal resource set allocated to a small-packet user is deactivated, and a resource in the semi-persistent antenna selection reference signal resource set allocated to a large-packet user is activated. The small-packet user refers to a terminal device whose service volume is less than a first service volume threshold, and the large-packet user refers to a terminal device whose service volume is greater than or equal to the first service volume threshold. For example, the first service volume threshold is X. If a service volume of a terminal device within set duration is less than X, the terminal device is a small-packet user. If a service volume of a terminal device within set duration is greater than or equal to X, the terminal device is a large-packet user. In specific implementation, the large-packet user includes, for example, a terminal device that is playing a video, and a terminal device that is performing network live broadcast. The small-packet user includes, for example, a terminal device that is using WeChat, and a terminal device that is performing a voice call.

The first terminal device in the cell 1 is used as an example. When the reference signal interference status of the cell 1 is the medium interference state, and the service volume of the first terminal device is less than the first service volume threshold, the resource in the semi-persistent antenna selection reference signal resource set in the first resource allocated to the first terminal device is deactivated. When the reference signal interference status of the cell 1 is the medium interference state, and the service volume of the first terminal device is greater than or equal to the first service volume threshold, the resource in the semi-persistent antenna selection reference signal resource set in the first resource allocated to the first terminal device is activated.

For Case b, when the reference signal interference status of the cell 1 is the medium interference state, the resource in the semi-persistent antenna selection reference signal resource set of the small-packet user is deactivated, and the resource in the semi-persistent antenna selection reference signal resource set of the large-packet user is activated. Therefore, a quantity of terminal devices that send reference signals can be reduced, interference from the cell 1 to a neighboring cell can be reduced, and normal sending of a terminal device with a large service volume is not affected.

Case c: When the reference signal interference status of the cell 1 is the high interference state, a service volume threshold is increased (for example, increased from a first service volume threshold to a second service volume threshold), and then it is determined, based on a service volume of the terminal device in the cell 1, to activate or deactivate a resource in the semi-persistent antenna selection reference signal resource set.

For example, when the reference signal interference status of the cell 1 is the high interference state, a resource in the semi-persistent antenna selection reference signal resource set allocated to a small-packet user is deactivated, and a resource in the semi-persistent antenna selection reference signal resource set allocated to a large-packet user is activated. The small-packet user refers to a terminal device whose service volume is less than the second service volume threshold, and the large-packet user refers to a terminal device whose service volume is greater than or equal to the second service volume threshold. For example, the second service volume threshold is Y. If a service volume of a terminal device within set duration is less than Y, the terminal device is a small-packet user. If a service volume of a terminal device within set duration is greater than or equal to Y, the terminal device is a large-packet user.

The first terminal device in the cell 1 is used as an example. When the reference signal interference status of the cell 1 is the high interference state, and the service volume of the first terminal device is less than the second service volume threshold, the resource in the semi-persistent antenna selection reference signal resource set in the first resource allocated to the first terminal device is deactivated. When the reference signal interference status of the cell 1 is the high interference state, and the service volume of the first terminal device is greater than or equal to the second service volume threshold, the resource in the semi-persistent antenna selection reference signal resource set in the first resource allocated to the first terminal device is activated.

For Case c, when the reference signal interference status of the cell 1 is the high interference state, a service volume threshold for determining the large-packet user and the small-packet user is increased, the resource in the semi-persistent antenna selection reference signal resource set of the small-packet user is deactivated, and the resource in the semi-persistent antenna selection reference signal resource set of the large-packet user is activated. Because the service volume threshold is increased, more terminal devices are identified as small-packet users, and resources in semi-persistent antenna selection reference signal resource sets of the small-packet users are deactivated. Therefore, a quantity of terminal devices that send reference signals can be further reduced, interference from the cell 1 to a neighboring cell can be further reduced, and normal sending of a service by a terminal device with a large service volume is not affected.

The following describes different implementation methods for determining a service volume threshold (for example, the first service volume threshold or the second service volume threshold) of a large-packet user or a small-packet user identified by a user.

Implementation method 1: The network device periodically collects statistics on service volumes of terminal devices in a cell, sorts the service volumes of the terminal devices in descending order, and uses a service volume of a terminal device at a preset rank as a service volume threshold.

For example, when a statistical periodicity arrives, accumulated service volumes of terminal devices in a cell in a period of time are obtained, and sorted in descending order, and a service volume of a terminal device ranked 10^{th} is used as a service volume threshold, or a service volume of a terminal device ranked last among top 20% terminal devices in terms of service volumes is used as a service volume threshold.

Implementation method 2: The network device periodically collects statistics on service volumes of terminal devices in a cell, and sorts the service volumes of the terminal devices in descending order. If a sum of service volumes of first (x-1) terminal devices is less than L, and a sum of service volumes of first x terminal devices is greater than or equal to L, the network device determines a service volume of an x^{th} terminal device as a service volume threshold. L is a product of a sum of the service volumes of the terminal devices in the cell and a preset proportion.

The preset proportion herein is a preset decimal or percentage that is greater than 0 and less than 1, for example, 70% or 80%.

For example, it is assumed that there are 100 terminal devices in the cell, and the preset proportion is 80%. In this case, L=sum of service volumes of the 100 terminal devices x 80%. The 100 terminal devices are sorted in descending order of service volumes. If a sum of service volumes of first 49 terminal devices is less than L, and a sum of service volumes of first 50 terminal devices is greater than or equal to L, a service volume of a 50^{th} terminal device is used as a service volume threshold.

Implementation method 3: The network device determines a service chain threshold based on service volumes scheduled by terminal devices in a cell and an air interface capability of the network device.

The air interface capability of the network device is resources that have been currently allocated by the network device. If the allocated resources are large, for example, greater than a resource amount threshold, it indicates that air interface load is heavy, and a current air interface capability is poor. If the allocated resources are small, for example, less than a resource amount threshold, it indicates that air interface load is light, and a current air interface capability is strong.

In the implementation method 3, the network device comprehensively determines the service volume threshold based on the service volumes scheduled by the terminal devices in the cell and the air interface capability of the network device.

It may be understood that, to implement functions in the foregoing embodiments, the terminal device or the network device includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on a particular application scenario and design constraint of the technical solutions.

FIG. 10 and FIG. 11 are diagrams of possible structures of communication apparatuses according to embodiments of this application. These communication apparatuses may be configured to implement functions of the terminal device or the network device in the foregoing method embodiments. Therefore, beneficial effects of the foregoing method embodiments can also be implemented. In embodiments of this application, the communication apparatus may be a terminal device or a network device, or may be a module (for example, a chip) applied to a terminal device or a network device.

The communication apparatus 1000 shown in FIG. 10 includes a processing unit 1010 and a transceiver unit 1020. The communication apparatus 1000 is configured to implement functions of the terminal device or the network device in the foregoing method embodiments.

When the communication apparatus 1000 is configured to implement a function of the network device in the foregoing method embodiment, the processing unit 1010 is configured to: determine a type of a first terminal device, where the type of the first terminal device is a nearby terminal device or a distant terminal device; and allocate, based on the type of the first terminal device, a first resource to the first terminal device from resources corresponding to the type of the first terminal device, where the first resource is used to send a reference signal.

In a possible implementation method, the reference signal includes a sounding reference signal.

In a possible implementation method, that the processing unit 1010 is configured to determine the type of the first terminal device specifically includes: The processing unit 1010 is configured to determine the type of the first terminal device based on uplink channel quality.

In a possible implementation method, the processing unit 1010 is further configured to: when the first terminal device is a terminal device that initially accesses a network, determine the uplink channel quality based on a demodulation reference signal from the first terminal device; or when the first terminal device is a terminal device that has accessed a network, determine the uplink channel quality based on the sounding reference signal from the first terminal device.

In a possible implementation method, the processing unit 1010 is further configured to group available resources into at least two groups of resources, where the at least two groups of resources include resources corresponding to the nearby terminal device and resources corresponding to the distant terminal device, each of the at least two groups of resources includes at least one resource block, and each of the at least one resource block occupies one time unit in a time domain and one comb resource in a frequency domain.

In a possible implementation method, the at least two groups of resources further include a resource shared by the nearby terminal device and the distant terminal device.

In a possible implementation method, the processing unit 1010 is further configured to: determine resource search start positions respectively corresponding to a plurality of cells, where a time interval between resource search start positions corresponding to any two of the plurality of cells is greater than a first threshold; and start to search for the available resources at the resource search start positions.

In a possible implementation method, the resources corresponding to the nearby terminal device are shared by nearby terminal devices in M cells, the resources corresponding to the distant terminal device are shared by distant terminal devices in N cells, and both M and N are positive integers.

In a possible implementation method, that the processing unit 1010 is configured to allocate the first resource to the first terminal device from the resources corresponding to the type of the first terminal device specifically includes: The processing unit 1010 is configured to allocate, based on a reference signal capability of the first terminal device, the first resource to the first terminal device from the resources corresponding to the type of the first terminal device.

In a possible implementation method, when the reference signal capability indicates that a plurality of antenna selection reference signal resource sets are supported, the first resource includes a plurality of semi-persistent antenna selection reference signal resource sets.

In a possible implementation method, the processing unit 1010 is further configured to: when the first terminal device is a mobile terminal device, activate a resource in a first semi-persistent antenna selection reference signal resource set, where the first semi-persistent antenna selection reference signal resource set is included in the plurality of semi-persistent antenna selection reference signal resource sets, and a frequency hopping multiple of the resource in the first semi-persistent antenna selection reference signal resource set is less than or equal to a second threshold; or when the first terminal device is a non-mobile terminal device, activate a resource in a second semi-persistent antenna selection reference signal resource set, where the second semi-persistent antenna selection reference signal resource set is included in the plurality of semi-persistent antenna selection reference signal resource sets, and a frequency hopping multiple of the resource in the second semi-persistent antenna selection reference signal resource set is greater than a second threshold.

In a possible implementation method, the processing unit 1010 is further configured to: when the first terminal device is the nearby terminal device, activate a resource in a third semi-persistent antenna selection reference signal resource set, where the third semi-persistent antenna selection reference signal resource set is included in the plurality of semi-persistent antenna selection reference signal resource sets, and a frequency hopping multiple of the resource in the third semi-persistent antenna selection reference signal resource set is less than or equal to a third threshold; or when the first terminal device is the distant terminal device, activate a resource in a fourth semi-persistent antenna selection reference signal resource set, where the fourth semi-persistent antenna selection reference signal resource set is included in the plurality of semi-persistent antenna selection reference signal resource sets, and a frequency hopping multiple of the resource in the fourth semi-persistent antenna selection reference signal resource set is greater than a third threshold.

In a possible implementation method, when the reference signal capability indicates that one antenna selection reference signal resource set is supported, and a quantity of semi-persistent reference signal resources supported by the first terminal device is greater than or equal to a quantity of periodic antenna selection reference signal resources supported by the first terminal device, the first resource includes one semi-persistent antenna selection reference signal resource set.

In a possible implementation method, the processing unit 1010 is further configured to: when a reference signal interference status of a cell accessed by the first terminal device is a low interference state, activate a resource in the semi-persistent antenna selection reference signal resource set in the first resource; or when a reference signal interference status of a cell accessed by the first terminal device is a medium interference state, and a service volume of the first terminal device is less than a first service volume threshold, deactivate a resource in the semi-persistent antenna selection reference signal resource set in the first resource; or when a reference signal interference status of a cell accessed by the first terminal device is a medium interference state, and a service volume of the first terminal device is greater than or equal to a first service volume threshold, activate a resource in the semi-persistent antenna selection reference signal resource set in the first resource; or when a reference signal interference status of a cell accessed by the first terminal device is a high interference state, and a service volume of the first terminal device is less than a second service volume threshold, deactivate a resource in the semi-persistent antenna selection reference signal resource set in the first resource; or when a reference signal interference status of a cell accessed by the first terminal device is a high interference state, and a service volume of the first terminal device is greater than or equal to a second service volume threshold, activate a resource in the semi-persistent antenna selection reference signal resource set in the first resource, where the second service volume threshold is greater than the first service volume threshold.

In a possible implementation method, when the reference signal capability indicates that one antenna selection reference signal resource set is supported, and a quantity of semi-persistent reference signal resources supported by the first terminal device is less than a quantity of periodic antenna selection reference signal resources supported by the first terminal device, the first resource includes a periodic antenna selection reference signal resource.

For more detailed descriptions about the processing unit 1010 and the transceiver unit 1020, directly refer to related descriptions in the foregoing method embodiments. Details are not described herein.

The communication apparatus 1100 shown in FIG. 11 includes a processor 1110 and an interface circuit 1120. The processor 1110 and the interface circuit 1120 are coupled to each other. It can be understood that the interface circuit 1120 may be a transceiver or an input/output interface. Optionally, the communication apparatus 1100 may further include a memory 1130, configured to store instructions executed by the processor 1110, store input data required for running instructions by the processor 1110, or store data generated after the processor 1110 runs instructions.

When the communication apparatus 1100 is configured to implement the foregoing method embodiments, the processor 1110 is configured to implement a function of the processing unit 1010, and the interface circuit 1120 is configured to implement a function of the transceiver unit 1020.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a terminal device or a network device. Certainly, the processor and the storage medium may alternatively exist in an access network device or a terminal as discrete components.

All or some of the foregoing embodiments may be implemented through software, hardware, firmware, or any combination thereof. When software is used to implement the embodiments, the embodiments may be implemented entirely or partially in a form of a computer program product. The computer program product includes one or more computer programs and instructions. The computer program (computer program) is a set of instructions that indicate each step of an electronic computer or another device having a message processing capability, and is usually written in a program design language and run on a target architecture. When the computer programs or instructions are loaded and executed on a computer, all or some of the processes or functions in embodiments of this application are executed. The computer may be a general-purpose computer, a dedicated computer, a computer network, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" refers to one or more, and "a plurality of" refers to two or more. The term "and/or" describes an association relationship between associated objects and may indicate three relationships. For example, A and/or B may indicate the following cases: Only A exists, both A and B exist, and only B exists. A and B may be singular or plural. In the text descriptions of this application, the character "/" indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A communication method, comprising:
determining a type of a first terminal device, wherein the type of the first terminal device is a nearby terminal device or a distant terminal device; and
allocating, based on the type of the first terminal device, a first resource to the first terminal device from resources corresponding to the type of the first terminal device, wherein the first resource is used to send a reference signal.

2. The method according to claim 1, wherein the reference signal comprises a sounding reference signal.

3. The method according to claim 1 or 2, wherein determining the type of the first terminal device comprises:
determining the type of the first terminal device based on uplink channel quality.

4. The method according to claim 3, wherein the method further comprises:
when the first terminal device is a terminal device that initially accesses a network, determining the uplink channel quality based on a demodulation reference signal from the first terminal device; or
when the first terminal device is a terminal device that has accessed a network, determining the uplink channel quality based on the sounding reference signal from the first terminal device.

5. The method according to any one of claims 1 to 4, wherein the method further comprises:
grouping available resources into at least two groups of resources, wherein the at least two groups of resources comprise resources corresponding to the nearby terminal device and resources corresponding to the distant terminal device, each of the at least two groups of resources comprises at least one resource block, and each of the at least one resource block occupies one time unit in a time domain and one comb resource in a frequency domain.

6. The method according to claim 5, wherein the at least two groups of resources further comprise a resource shared by the nearby terminal device and the distant terminal device.

7. The method according to claim 5 or 6, wherein the method further comprises:
determining resource search start positions corresponding to a plurality of cells, wherein a time interval between resource search start positions corresponding to any two of the plurality of cells is greater than a first threshold; and
starting to search for the available resources at the resource search start positions.

8. The method according to any one of claims 1 to 7, wherein the resources corresponding to the nearby terminal device are shared by nearby terminal devices in M cells, the resources corresponding to the distant terminal device are shared by distant terminal devices in N cells, and both M and N are positive integers.

9. The method according to any one of claims 1 to 8, wherein allocating the first resource to the first terminal device from the resources corresponding to the type of the first terminal device comprises:
allocating, based on a reference signal capability of the first terminal device, the first resource to the first terminal device from the resources corresponding to the type of the first terminal device.

10. The method according to claim 9, wherein when the reference signal capability indicates that a plurality of antenna selection reference signal resource sets are supported, the first resource comprises a plurality of semi-persistent antenna selection reference signal resource sets.

11. The method according to claim 10, wherein the method further comprises:
when the first terminal device is a mobile terminal device, activating a resource in a first semi-persistent antenna selection reference signal resource set, wherein the first semi-persistent antenna selection reference signal resource set is contained in the plurality of semi-persistent antenna selection reference signal resource sets, and a frequency hopping multiple of the resource in the first semi-persistent antenna selection reference signal resource set is less than or equal to a second threshold; or
when the first terminal device is a non-mobile terminal device, activating a resource in a second semi-persistent antenna selection reference signal resource set, wherein the second semi-persistent antenna selection reference signal resource set is contained in the plurality of semi-persistent antenna selection reference signal resource sets, and a frequency hopping multiple of the resource in the second semi-persistent antenna selection reference signal resource set is greater than the second threshold.

12. The method according to claim 10, wherein the method further comprises:
when the first terminal device is a nearby terminal device, activating a resource in a third semi-persistent antenna selection reference signal resource set, wherein the third semi-persistent antenna selection reference signal resource set is contained in the plurality of semi-persistent antenna selection reference signal resource sets, and a frequency hopping multiple of the resource in the third semi-persistent antenna selection reference signal resource set is less than or equal to a third threshold; or
when the first terminal device is a distant terminal device, activating a resource in a fourth semi-persistent antenna selection reference signal resource set, wherein the fourth semi-persistent antenna selection reference signal resource set is contained in the plurality of semi-persistent antenna selection reference signal resource sets, and a frequency hopping multiple of the resource in the fourth semi-persistent antenna selection reference signal resource set is greater than the third threshold.

13. The method according to claim 9, wherein when the reference signal capability indicates that one antenna selection reference signal resource set is supported, and a quantity of semi-persistent reference signal resources supported by the first terminal device is greater than or equal to a quantity of periodic antenna selection reference signal resources supported by the first terminal device, the first resource comprises one semi-persistent antenna selection reference signal resource set.

14. The method according to claim 10 or 13, wherein the method further comprises: when a reference signal interference status of a cell accessed by the first terminal device is a low interference state, activating a resource in the semi-persistent antenna selection reference signal resource set in the first resource; or
when a reference signal interference status of a cell accessed by the first terminal device is a medium interference state, and a service volume of the first terminal device is less than a first service volume threshold, deactivating a resource in the semi-persistent antenna selection reference signal resource set in the first resource; or
when a reference signal interference status of a cell accessed by the first terminal device is a medium interference state, and a service volume of the first terminal device is greater than or equal to the first service volume threshold, activating a resource in the semi-persistent antenna selection reference signal resource set in the first resource; or
when a reference signal interference status of a cell accessed by the first terminal device is a high interference state, and a service volume of the first terminal device is less than a second service volume threshold, deactivating a resource in the semi-persistent antenna selection reference signal resource set in the first resource; or
when a reference signal interference status of a cell accessed by the first terminal device is a high interference state, and a service volume of the first terminal device is greater than or equal to the second service volume threshold, activating a resource in the semi-persistent antenna selection reference signal resource set in the first resource, wherein
the second service volume threshold is greater than the first service volume threshold.

15. The method according to claim 9, wherein when the reference signal capability indicates that one antenna selection reference signal resource set is supported, and a quantity of semi-persistent reference signal resources supported by the first terminal device is less than a quantity of periodic antenna selection reference signal resources supported by the first terminal device, the first resource comprises a periodic antenna selection reference signal resource.

16. The method according to any one of claims 10 to 15, wherein the first resource further comprises a long-periodicity codebook reference signal resource.

17. A communication apparatus, comprising a module configured to perform the method according to any one of claims 1 to 16.

18. A communication apparatus, comprising a processor and an interface circuit, wherein the processor is configured to communicate with another apparatus through the interface circuit, and perform the method according to any one of claims 1 to 16.

19. A computer program product, wherein the computer program product comprises instructions, and when the instructions are run on a processor, the processor is enabled to perform the method according to any one of claims 1 to 16.

20. A computer-readable storage medium, wherein the storage medium stores a computer program or instructions, and when the computer program or the instructions are executed by a communication apparatus, the method according to any one of claims 1 to 16 is implemented.

21. A communication system, comprising at least one communication apparatus, wherein the at least one communication apparatus is configured to perform the method according to any one of claims 1 to 16.
